# EUROPÄISCHE PATENTSCHRIFT

(11) **EP 2 700 619 B1**
(45) Veröffentlichungstag und Bekanntmachung des Hinweises auf die Patenterteilung: **07.01.2015**
(21) Anmeldenummer: 13178350.8
(22) Anmeldetag: 29.07.2013
(51) Int. Cl.: C02F 11/12, F26B 25/04

(54) **Vorrichtung zum Trocknen von insbesondere Klärschlamm**
Device for drying, in particular of sewage sludge
Dispositif de séchage notamment de boues d'épuration

(30) Priorität: 24.08.2012 DE 102012107806
(43) Veröffentlichungstag der Anmeldung: 26.02.2014
(73) Patentinhaber: I + M Verwaltungs-GmbH, 72401 Haigerloch-Gruol (DE)
(72) Erfinder: Zizmann, Richard, 72401 Haigerloch-Owingen (DE); Volm, Melanie, 72406 Bisingen (DE)
(74) Vertreter: Späth, Dieter

(56) Entgegenhaltungen:
- EP-B1- 2 013 148
- DE-U1-202008 005 798

## Beschreibung

Die Erfindung betrifft eine Vorrichtung zum Trocknen von insbesondere Klärschlamm mit den Merkmalen des Oberbegriffs des Anspruchs 1. Sie ist allgemein zum Trocknen schüttfähiger Biomasse oder Masse geeignet.

Eine derartige Vorrichtung ist aus bekannt aus der europäischen Patentschrift EP 2 013 148 B1. Die bekannte Vorrichtung weist eine Trockenfläche auf, die auch als Boden der Vorrichtung aufgefasst werden kann und auf die der Klärschlamm zum Trocknen ausbringbar ist. Über der Trockenfläche ist ein Balken quer zu einer Förderrichtung angeordnet, der in der Förderrichtung bewegbar ist. Vom Balken stehen Zinken nach unten zur Trockenfläche ab. Der Balken mit den Zinken bildet einen Förderer zum Lockern, Wenden und Verteilen des Klärschlamms auf der Trockenfläche und zum Fördern in der Förderrichtung. Wird der Balken in der Förderrichtung über die Trockenfläche bewegt, durchfurchen die vom Balken nach unten abstehenden Zinken den Klärschlamm auf der Trockenfläche, wobei der Klärschlamm bei jedem Durchgang gelockert und gewendet und ein Stück weit in der Förderrichtung bewegt wird und sich bei mehreren Durchgängen auf der Trockenfläche verteilt, wobei die Verteilung nicht unbedingt gleichmäßig ist.

Von der Trockenfläche der bekannten Vorrichtung stehen Stifte nach oben ab. Die Stifte sind auf einer gedachten, geraden Linie schräg zur Förderrichtung und über die Breite der Trockenfläche mit Abstand nebeneinander und zwischen den vom Balken des Förderers nach unten abstehenden Zinken angeordnet, wenn sich der Balken mit dem Zinken auf Höhe der Stifte befindet. Bei der Bewegung des Balkens in der Förderrichtung bewegen sich die Zinken des Balkens zwischen den von der Trockenfläche nach oben stehenden Stiften hindurch. Dabei wird an den Zinken anhaftender Klärschlamm abgestriffen und große Klärschlammklumpen, die größer als ein Abstand der Stifte voneinander sind, werden zerkleinert. "Treffen" die vom Balken nach unten abstehenden Zinken nicht zwischen die von der Trockenfläche nach oben stehenden Stifte, sondern stoßen die Zinken gegen die Stifte, kann es zu Schäden in immenser Höhe kommen und zum Stillstand der Vorrichtung führen.

Das Dokument DE 20 2008 005 798 U1 offenbart eine andere, aus dem Stand der Technik bekannte Vorrichtung.

Aufgabe der Erfindung ist, die Abstreifwirkung der bodenfesten Stifte einer Vorrichtung der vorstehend erläuterten Art zu verbessern.

Diese Aufgabe wird durch die Merkmale des Anspruchs 1 gelöst. Die erfindungsgemäße Vorrichtung weist sich in Förderrichtung erstreckende Abstreifer anstatt Stifte auf. Damit ist gemeint, dass die Abstreifer in der Förderrichtung länger als sie quer zur Förderrichtung breit sind. Vorzugsweise beträgt die Länge der Abstreifer in der Förderrichtung ein Mehrfaches ihrer Breite quer zur Förderrichtung. Die Abstreifer sind in der Förderrichtung und auf der Trockenfläche stehend angeordnet. Die Abstreifer bilden zugleich eine Führung, die die Zinken oder allgemein Förderelemente des Förderers in der Förderrichtung führt, wenn sich die Förderelemente zwischen den Abstreifern befinden. Ein Abstand der Abstreifer voneinander ist so groß oder etwas größer wie ein Durchmesser bzw. eine Breite der Förderelemente des Förderers. Es hat sich gezeigt, dass die Abstreifwirkung sich in Förderrichtung erstreckender Abstreifer besser als die Abstreifwirkung von Stiften ist, jedenfalls im Zusammenwirken mit stiftförmigen Förderelementen, wobei die Abstreifwirkung auch von der Schlammart abhängt. Auch die Zerkleinerungswirkung von Klärschlammklumpen ist verbessert, weil die Klumpen nicht oder jedenfalls nicht so leicht schräg zwischen den Abstreifern durchtreten und dadurch gewissermaßen ausweichen können, was bei stiftförmigen Abstreifern möglich ist.

Vorzugsweise sind die Abstreifer Bügel, beispielsweise U-förmige Bügel, wobei Schenkel der U-förmigen Bügel von der Trockenfläche nach oben stehen und ein Joch sich in der Förderrichtung erstreckt, so dass in der Förderrichtung gesehen die Schenkel hintereinander angeordnet sind; die Schenkel können auch einen seitlichen Versatz aufweisen, wodurch eine Sperrwirkung der Abstreifer gegen den Klärschlamm und damit eine Zerkleinerungswirkung erhöht sind. Die Bügel können beispielsweise aus Stahlstäben oder vergleichbarem Material gebogen und/oder federnd sein. Durch eine federnde Ausbildung können die Abstreifer den Förderelementen, wenn sie sich zwischen den Abstreifern hindurch bewegen, ausweichen, wodurch eine Abnutzung verringert und Beschädigungen vermieden werden.

Eine andere Ausgestaltung der Erfindung sieht Platten als Abstreifer vor.

Der Förderer der erfindungsgemäßen Vorrichtung weist eine Traverse auf, die sich über der Trockenfläche befindet und sich quer zur Förderrichtung erstreckt, wobei quer nicht zwingend rechtwinklig bedeutet, die Traverse kann sich auch schräg zur Förderrichtung erstrecken. Die Traverse kann ein Balken sein, allgemein ist sie ein Element, das sich wie beschrieben quer zur Förderrichtung über der Trockenfläche erstreckt und das nach unten abstehende Förderelemente aufweist. Diese Förderelemente können wie im Stand der Technik Zinken, also stiftförmige Elemente sein, sie können auch quer- oder schräg stehende Paddel oder Pflugkörper sein. Die Aufzählung ist beispielhaft und nicht abschließend. Bevorzugt weist der Förderer der erfindungsgemäßen Vorrichtung allerdings stiftförmige Förderelemente auf, die von der Traverse nach unten abstehen, weil sie einfach und in ihrer Wirkung ausreichend sind.

In bevorzugter Ausgestaltung der Erfindung weisen die Abstreifer und/oder die Förderelemente Versatz zueinander in der Förderrichtung auf. Dadurch gelangen beim Bewegen der Traverse nicht alle Förderelemente gleichzeitig, sondern nacheinander zwischen die plattenförmigen oder sich in der Förderrichtung erstreckenden Abstreifer. Das hat den Vorteil einer niedrigeren notwendigen maximalen Förderkraft, weil an den Abstreifern stauender Klärschlamm nicht gleichzeitig sondern nacheinander zwischen die Abstreifer gefördert wird. Das Fördern des Klärschlamms zwischen die Abstreifer verteilt sich dadurch auf einen längeren Förderweg, die maximale Kraft verringert sich auf einen Bruchteil.

Eine Ausgestaltung der Erfindung sieht vor, dass der Versatz einzelner Abstreifer und/oder Förderelemente kleiner als eine Länge der plattenförmigen Abstreifer bzw. kleiner als eine Erstreckung der Abstreifer in der Förderrichtung ist. Weisen sowohl die Abstreifer als auch die Förderelemente Versatz auf, ist der Gesamtversatz einander zugeordneter Abstreifer und Förderelemente gemeint. Diese Ausgestaltung der Erfindung bewirkt, dass sich mindestens ein Förderelement zwischen den Abstreifern befindet und dadurch die Traverse führt, wenn ein anderes Förderelement zwischen zwei Abstreifer eintritt, so dass das andere Förderelement beim Eintritt zwischen die Abstreifer geführt ist. Diese Ausgestaltung der Erfindung vermeidet, dass Förderelemente gegen Abstreifer prallen. Als geeignete Länge der plattenförmigen Abstreifer bzw. ihrer Erstreckung in der Förderrichtung wird ein Mehrfaches, beispielsweise das drei- bis fünffache des Durchmessers der Förderelemente angesehen, wenn diese stiftförmig sind.

Eine Weiterbildung sieht vor, dass von einer zur anderen Seite der Trockenfläche gesehen die Förderelemente und/oder die Abstreifer stets in derselben Richtung versetzt sind. Die Förderelemente und/oder die Abstreifer sind also beispielsweise auf einer gedachten Geraden schräg zur Förderrichtung angeordnet. Dadurch treten benachbarte Förderelemente von einer Seite der Trockenfläche ausgehend eines nach dem anderen zwischen die Abstreifer ein und werden dabei von einem benachbarten Förderelement geführt, das sich zwischen den Abstreifern befindet. Diese Ausgestaltung der Erfindung verbessert ein "Treffen" der Förderelemente zwischen die Abstreifer weil Abstandstoleranzen zwischen benachbarten Förderelementen und Abstreifern kleiner als zwischen weiter voneinander entfernten Förderelementen und Abstreifern sind.

Eine Ausgestaltung der Erfindung sieht vor, dass die Vorrichtung zumindest in Höhe der Abstreifer und, wenn die Abstreifer Versatz in der Förderrichtung zueinander aufweisen, zumindest in Höhe eines vordersten Abstreifers, eine Führung der Traverse in der Förderrichtung aufweist. Die Führung der Traverse richtet die Förderelemente so aus, dass sie zwischen die Abstreifer "treffen" und nicht gegen die Abstreifer prallen. Das ist insbesondere der Fall, wenn das Förderelement, das der Führung nahe ist, zuerst zwischen die Abstreifer eintritt. Die bei Versatz nachfolgend zwischen die Abstreifer eintretenden Förderelemente werden beim Eintritt zwischen die Abstreifer von mindestens einem Förderelement geführt, das sich zwischen Abstreifern befindet. Die Führung kann sich auch über eine größere Länge erstrecken, auch über eine ganze Länge der Trockenfläche. Die Vorrichtung kann auf beiden Seiten der Trockenfläche Führungen aufweisen beispielsweise in Form von Schienen nach Art von Eisen- oder sonstigen Bahnschienen aufweisen. Eine oder mehrere Führungen können sich auch innerhalb der Trockenfläche befinden, auch über der Trockenfläche.

Die Traverse kann hin- und zurück über die Trockenfläche bewegt werden, wobei bei einem Rücklauf die Förderelemente angehoben werden müssen um den Klärschlamm nicht wieder zurückzufördern. Vorzugsweise wird die Traverse umlaufend insbesondere nach Art eines Förderbands oder eines Seil- oder Kettenförderers bewegt.

Die Erfindung wird nachfolgend anhand in der Zeichnung dargestellter Ausführungsbeispiele näher erläutert. Es zeigen:
- Fig. 1: eine erfindungsgemäße Vorrichtung in Seitenansicht;
- Fig. 2: die Vorrichtung aus Figur 1 in Draufsicht; ;
- Fig. 3: eine abgewandelte Ausführungsform der Vorrichtung aus Figuren 1 und 2 in Seitenansicht; und
- Fig. 4: die Vorrichtung aus Fig. 3 in Draufsicht.

Die Zeichnung ist als schematisierte und vereinfachte Darstellung zum Verständnis und zur Erläuterung der Erfindung zu verstehen.

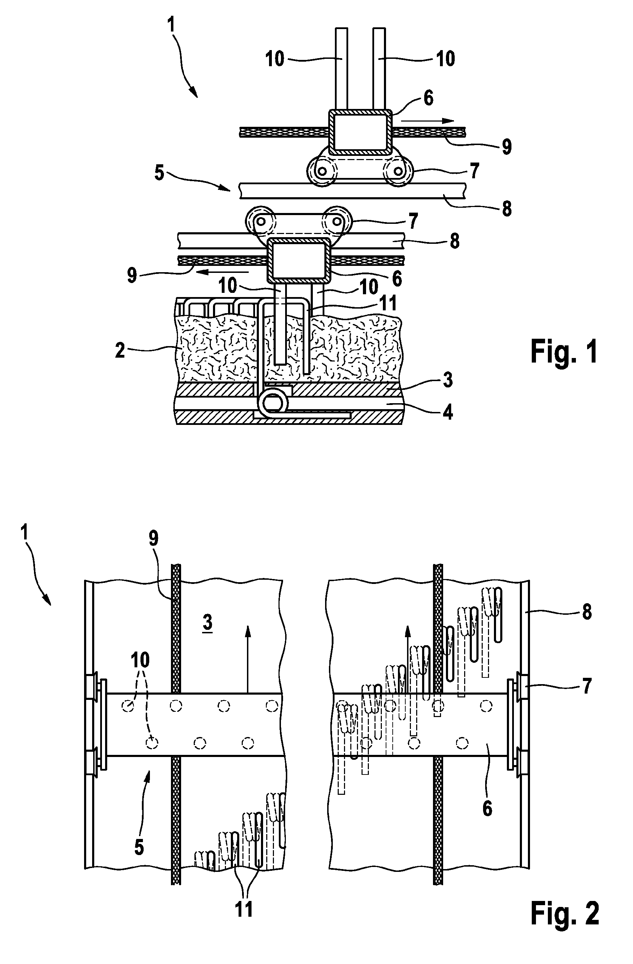

Die in Figuren 1 und 2 dargestellte, erfindungsgemäße Vorrichtung 1 dient zum Trocknen von Klärschlamm 2, der auf eine Bodenplatte der Vorrichtung 1 ausbringbar ist, die hier als Trockenfläche 3 bezeichnet wird. Die die Trockenfläche 3 bildende Bodenplatte ist mit Heizrohren 4 versehen.

Zum Fördern des Klärschlamms 2 und Verteilen auf der Trockenfläche 3 weist die Vorrichtung 1 einen Förderer 5 auf, der im Ausführungsbeispiel als umlaufender Endlosförderer ausgebildet ist. Der Förderer 5 weist eine Anzahl Rechteckrohre als Traversen 6 auf, die sich oberhalb der Trockenfläche 3 befinden und sich quer über die Trockenfläche 3 erstrecken. An ihren Enden sind die Traversen 6 mit Rollen 7 auf Schienen geführt, die Führungen 8 der Traversen 6 bilden. Anstelle einer wälzenden Führung kann eine gleitende Führung mit Kufen oder dgl. vorgesehen werden (nicht dargestellt). Die Schienen verlaufen in einer Längsrichtung der Trockenfläche 3, die eine Förderrichtung der Vorrichtung 1 ist. Die Traversen 6 sind beispielsweise mit Ketten oder Stahlseilen 9 miteinander verbunden, mit denen sie bewegt werden. Die Traversen 6 bewegen sich in einer unteren Ebene in der Förderrichtung über die Trockenfläche 3 und in einer oberen Ebene zurück. Umlenkeinrichtungen für die Ketten oder Stahlseile 9 und die Traversen 6 an Enden der Trockenfläche 3 sind nicht dargestellt. Der Förderer 5 kann, wie dargestellt, mehrere Traversen 6 aufweisen, grundsätzlich genügt eine Traverse 6. In Figur 2 ist nur eine untere Traverse 6 gezeichnet, die in der Förderrichtung bewegt wird. Die Traversen 6 können kontinuierlich oder gelegentlich bewegt werden.

Von den Traversen 6 in der unteren Ebene stehen Stifte nach unten zur Trockenfläche 3 ab, die Förderelemente 10 bilden. Die Förderelemente 10 enden über der Trockenfläche 3, sie streifen nicht. Von den rücklaufenden Traversen 6 in der oberen Ebene stehen die Förderelemente 10 nach oben ab. Denkbar ist auch ein reversierender Betrieb, bei dem die Traversen 6 nicht nur in der Förderichtung bewegt werden, sondern hin- und zurück über die Trockenfläche 3, ggf. auch nur hin- und zurück über einen Teil einer Länge der Trockenfläche 3. Damit der Klärschlamm 2 bei einem Reversierbetrieb von einem zum anderen Ende der Trockenfläche 3 gefördert wird, werden die Traversen 6 bei der Rückbewegung angehoben (nicht dargestellt). In seitlicher Richtung, d. h. in Längsrichtung der Traversen 6 und quer zur Förderrichtung, weisen die Förderelemente 10 gleiche Abstände voneinander auf. Im Ausführungsbeispiel sind sie auf einer gedachten Zick-Zack-Linie angeordnet, d. h. die Förderelemente 10 sind abwechselnd nahe einer Vorder- und einer Rückseite der Traversen 6 angeordnet. Das ist allerdings nicht zwingend für die Erfindung, die Förderelemente 10 können auch auf einer gedachten geraden Linie nebeneinander angeordnet sein.

Von der Trockenfläche stehen Abstreifer 11 nach oben ab, die mit Abstand unterhalb der Traversen 6 enden. In Figuren 1 und 2 sind die Abstreifer 11 U-förmige Federbügel aus Stahl, wobei das "U" auf dem Kopf steht, eine geschlossene Seite des "U" befindet sich oben. Die die Abstreifer 11 bildenden Federbügel weisen ein Joch auf, das sich horizontal unterhalb der Traversen 6 in der Förderrichtung erstreckt. Vom Joch ragen zwei Schenkel des U-förmigen Federbügels vertikal nach unten, wobei ein in Förderrichtung vorderer Schenkel oberhalb der Trockenfläche 3 endet. Der andere Schenkel geht in eine Schraubenfeder über und setzt sich an deren anderem Ende mit einem horizontalen und in der Trockenfläche 3 befestigten Schenkel fort. Es kann auch umgekehrt der in Förderichtung vordere Schenkel der Bügel über die Schraubenfeder oder in anderer Weise federnd an der Trockenfläche 3 befestigt und der in Förderrichtung hintere Schenkel beweglich sein. In Förderrichtung gesehen befinden sich die beiden vertikalen Schenkel der U-förmigen Federbügel, die die Abstreifer 11 bilden, hintereinander. Eine gedachte, von den beiden vertikalen Schenkeln und dem Joch der Federbügel aufgespannten Ebene verläuft in der Förderrichtung der erfindungsgemäßen Vorrichtung 1, die Abstreifer 11, welche die Federbügel bilden, erstrecken sich in der Förderrichtung. Die beiden vertikalen Schenkel und damit der Federbügel sind höher als das horizontale Joch lang ist. Das ist allerdings nicht zwingend für die Erfindung. Durch die federnde Ausbildung weichen die Abstreifer 11 den Förderelementen 10 aus, wenn die Förderelemente 10 bei ihrer Bewegung nicht wie vorgesehen zwischen die Abstreifer 11 gelangen, sondern gegen sie stoßen. Ein Verschleiß wird gemindert und eine Beschädigung vermieden.

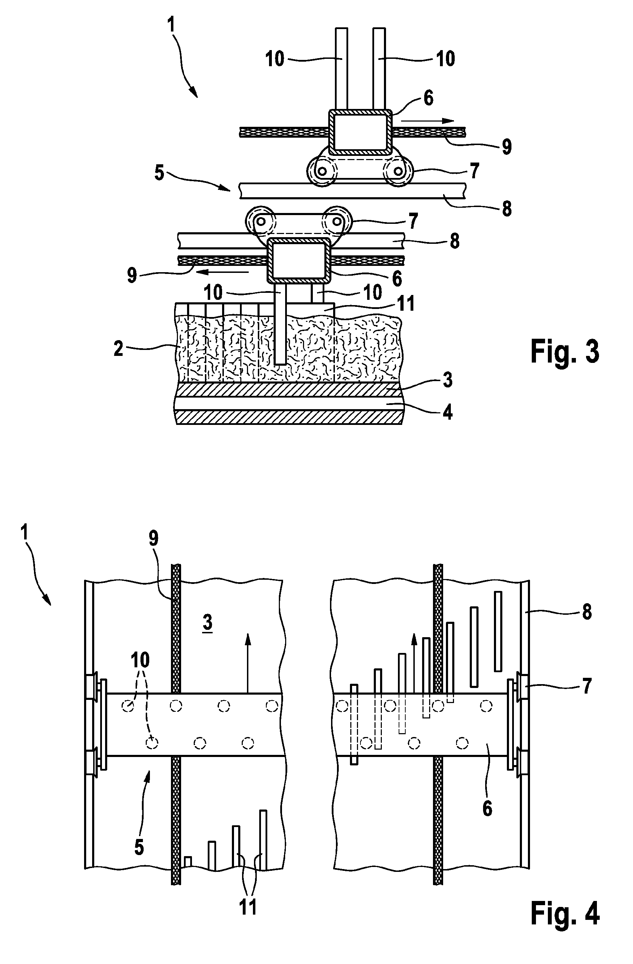

In Figuren 3 und 4 sind die Abstreifer 11 Platten, die in der Förderrichtung der erfindungsgemäßen Vorrichtung 1 ausgerichtet von der Trockenfläche 3 vertikal nach oben stehen und unter den Traversen 6 enden. Im übrigen sind beide Vorrichtungen 1 gleich ausgebildet.

In beiden erfindungsgemäßen Vorrichtungen 1 erstrecken sich die Abstreifer 11 in Längsrichtung der Trockenfläche 3, d. h. in der Förderrichtung. Ihr seitlicher Abstand voneinander ist größer als, beispielsweise mindestens doppelt so groß wie ein Durchmesser der Förderelemente 10 und die Abstreifer 11 sind zwischen den Förderelementen 10 angeordnet, d. h. so, dass bei Bewegung der Traversen 6 die Förderelemente 10 zwischen den Abstreifern 11 hindurchtreten. Die Abstreifer 11 sind in der Förderrichtung zueinander versetzt, und zwar von einer Seite der Trockenfläche 3 zur andere Seite immer in der selben Richtung. Anders ausgedrückt sind die plattenförmigen Abstreifer 11 auf einer gedachten Geraden angeordnet, die schräg zur Förderrichtung verläuft. Das gilt jedenfalls für die in Förderrichtung vorderen Schenkel der Federbügel bzw. in Förderrichtung vordere Ränder der Platten, auf die sich die Förderelemente 10 bei Bewegung in der Förderrichtung zu bewegen. Bei der Bewegung der Traverse 6 mit den Förderelementen 10 in der Förderrichtung gelangen durch den Versatz der Abstreifer 11 die Förderelemente 10 eines nach dem anderen und beginnend auf einer Seite der Trockenfläche 3 zwischen die Abstreifer 11. Das hat zum Einen den Vorteil, dass an den Abstreifern 11 stauender Klärschlamm 2 nicht gleichzeitig auf der gesamten Breite der Trockenfläche 3 zwischen die Abstreifer 11 bewegt wird, sondern nacheinander von der einen Seite der Trockenfläche 3 zur anderen Seite, d. h. auf einen längeren Förderweg verteilt. Eine dazu notwendige Förderkraft der Traverse 6 ist deswegen niedriger. Außerdem führen die sich in der Förderrichtung erstreckenden Abstreifer 11 die Förderelemente 10 in der Förderrichtung, wenn sich die Förderelemente 10 zwischen den Abstreifern 11 befinden. Der Versatz der plattenförmigen Abstreifer 11 in der Förderrichtung und ihre Länge sind so gewählt, dass immer mindestens ein Förderelement 10, vorzugsweise zwei bis drei Förderelemente 10, sich zwischen den Abstreifern 11 befinden und dabei die Traverse 6 und über die Traverse 6 die anderen Förderelemente 10 führen, wenn das nächste Förderelement 10 zwischen die Abstreifer 11 eintritt. Durch diese Führung wird vermieden, dass Förderelemente 10 durch seitlichen Versatz gegen die Abstreifer 11 prallen. Es führt immer ein Förderelement 10 wenn ein benachbartes Förderelement 10 zwischen die Abstreifer 11 eintritt, wodurch Toleranzen klein sind. Das erste Förderelement 10, das zwischen die Abstreifer 11 eintritt, befindet sich an einem Ende der Traverse 6 auf einer Seite der Trockenfläche 3, wo die Traverse 6 mit der die Führung 8 bildenden Schiene geführt ist. Dadurch ist auch beim Eintritt des ersten Förderelements 10 zwischen die Abstreifer 11 das Förderelement 10 mit kleiner Toleranz geführt, damit es nicht gegen einen der plattenförmigen Abstreifer 11 prallt. Stößt dennoch ein Förderelement 10 gegen eine Abstreifer 11, weicht dieser aus, wenn er als Federbügel oder in anderer Weise federnd oder beweglich ausgebildet ist, wodurch wie schon gesagt ein Verschleiß verringert und eine Beschädigung vermieden werden.

Die Abstreifer 11 weisen eine mehrfache, beispielsweise die drei- bis fünffache Länge des Durchmessers der als Stifte ausgebildeten Förderelemente 10 auf. Im Zusammenwirken mit den Förderelementen 10 zerkleinern die Abstreifer 11 Klärschlammklumpen zuverlässig auf eine Maximalgröße, die vor allem durch den Abstand der Abstreifer 11 voneinander, aber auch durch die Förderelemente 10 bestimmt ist. Aufgrund ihrer Erstreckung in der Förderrichtung weisen die Platten als Abstreifer 11 eine in der Förderrichtung ausreichend lange Reibungsfläche auf um die Förderelemente 10 von anhaftendem Klärschlamm zu reinigen. Sie reinigen die Förderelemente 10 nicht unbedingt vollständig von Klärstamm, aber in ausreichendem Maße. Bei den Federbügeln als Abstreifer 11 bewirken die in der Förderichtung hintereinander angeordneten vertikalen Schenkel eine gute Abstreif- und Zerkleinerungswirkung besser als einzeln stehende Stifte.

Bei der Bewegung der Traverse 6 bewegen sich die Förderelemente 10 durch den Klärschlamm 2. Dabei bewegen sie den Klärschlamm 2 ein Stück weit in der Förderrichtung, verteilen den Klärschlamm 2 - nicht unbedingt gleichmäßig - auf der Trockenfläche 3 und wenden und lockern den Klärschlamm. Die Traversen 6 können kontinuierlich bewegt werden, vorgesehen ist eine Bewegung von Zeit zu Zeit.

## Patentansprüche

1. Vorrichtung zum Trocknen von insbesondere Klärschlamm (2), mit einer Trockenfläche (3), auf die der Klärschlamm (2) zum Trocknen ausbringbar ist, mit einem Förderer (5) zum Lockern und Wenden des Klärschlamms (2), Verteilen des Klärschlamms (2) auf der Trockenfläche (3) und zum Fördern des Klärschlamms (2) in einer Förderrichtung, der eine Traverse (6) aufweist, die sich über der Trockenfläche (3) befindet und sich quer zur Förderrichtung erstreckt und in der Förderrichtung bewegbar ist und die nach unten zur Trockenfläche (3) abstehende, mit Abstand nebeneinander angeordnete Förderelemente (10) aufweist, die bei einer Bewegung der Traverse (6) in der Förderrichtung den Klärschlamm (2) auf der Trockenfläche (3) lockern und wenden, verteilen und in der Förderrichtung fördern, und mit Abstreifern (11), die zwischen den Förderelementen (10) von der Trockenfläche (3) nach oben stehen und bei einem Passieren der Förderelemente (10) an den Förderelementen (10) haftenden Klärschlamm (2) von den Förderelementen (10) abstreifen und große Klärschlammklumpen zerkleinern, **dadurch gekennzeichnet, dass** sich die Abstreifer (11) in der Förderrichtung erstrecken und die Förderelemente (10) führen, wenn sich die Förderelemente (10) zwischen den Abstreifern (11) befinden.

2. Vorrichtung nach Anspruch 1, **dadurch gekennzeichnet, dass** die Abstreifer (11) Bügel sind.

3. Vorrichtung nach Anspruch 1, **dadurch gekennzeichnet, dass** die Abstreifer (11) federn.

4. Vorrichtung nach Anspruch 1, **dadurch gekennzeichnet, dass** die Abstreifer (11) Platten sind.

5. Vorrichtung nach einem der Ansprüche 1 bis 4, **dadurch gekennzeichnet, dass** die Abstreifer (11) und/oder die Förderelemente (10) Versatz zueinander in der Förderrichtung aufweisen.

6. Vorrichtung nach Anspruch 5, **dadurch gekennzeichnet, dass** der Versatz einzelner Abstreifer (11) und/oder Förderelemente (10) nicht größer als eine Erstreckung der Abstreifer (11) in der Förderrichtung ist.

7. Vorrichtung nach Anspruch 5 oder 6, **dadurch gekennzeichnet, dass** benachbarte Abstreifer (11) und/oder Förderelemente (10) von einer zur anderen Seite der Trockenfläche (3) stets Versatz in der selben Richtung aufweisen.

8. Vorrichtung nach einem der Ansprüche 1 bis 7, **dadurch gekennzeichnet, dass** die Vorrichtung (1) zumindest in Höhe eines vordersten Abstreifers (11) eine Führung (8) der Traverse (6) in der Förderrichtung aufweist.

9. Vorrichtung nach einem der vorhergehenden Ansprüche, **dadurch gekennzeichnet, dass** die Traverse (6) umlaufend bewegt wird.

10. Vorrichtung nach einem der Ansprüche 1 bis 8, **dadurch gekennzeichnet, dass** die Traverse (6) reversierend bewegt wird.

## Claims

1. Device to dry, in particular, sewage sludge (2), having a drying surface (3) to which the sewage sludge (2) is able to be applied for drying, having a conveyor (5) for loosening and turning the sewage sludge (2), distributing the sewage sludge (2) on the drying surface (3) and for conveying the sewage sludge (2) in a conveying direction which has a traverse (6) which is situated above the drying surface (3) and extends transversely to the conveying direction and is moveable in the conveying direction, and which has conveyor elements (10) which protrude downwards towards the drying surface (3) and are arranged alongside one another with spacing, which loosen and turn the sewage sludge (2) on the drying surface (3) during a movement of the traverse (6) in the conveying direction, distribute it and convey it in the conveying direction, and having wipers (11) which protrude upwards from the drying surface (3) between the conveyor elements (10) and wipe sewage sludge (2) from the conveyor elements (10), said sludge adhering to the conveyor elements (10), when the conveyor elements (10) pass, and crush large sewage sludge clumps, **characterised in that** the wipers (11) extend in the conveying direction and guide the conveyor elements (10) if the conveyor elements (10) are situated between the wipers (11).

2. Device according to claim 1, **characterised in that** the wipers (11) are brackets.

3. Device according to claim 1, **characterised in that** the wipers (11) are elastic.

4. Device according to claim 1, **characterised in that** the wipers (11) are plates.

5. Device according to one of claims 1 to 4, **characterised in that** the wipers (11) and/or the conveyor elements (10) have an offset to one another in the conveying direction.

6. Device according to claim 5, **characterised in that** the offset of individual wipers (11) and/or conveyor elements (10) is not greater than an extension of the wipers (11) in the conveying direction.

7. Device according to claim 5 or 6, **characterised in that** adjacent wipers (11) and/or conveyor elements (10) always have an offset in the same direction, from one side to the other side of the drying surface (3).

8. Device according to one of claims 1 to 7, **characterised in that** the device (1) has at least one guiding (8) of the traverse (6) in the conveying direction, at least at the height of a foremost wiper (11).

9. Device according to one of the preceding claims, **characterised in that** the traverse (6) is moved in a circulating manner.

10. Device according to one of claims 1 to 8, **characterised in that** the traverse (6) is moved in a reverse direction.

## Revendications

1. Dispositif de séchage notamment de boues d'épuration (2), avec une surface de séchage (3) sur laquelle les boues d'épuration (2) peuvent être épandues pour le séchage, avec un convoyeur (5) pour désagréger et retourner les boues d'épuration (2), répartir les boues d'épuration (2) sur la surface de séchage (3) et transporter les boues d'épuration (2) dans une direction de transport, convoyeur qui présente une traverse (6), laquelle se trouve au-dessus de la surface de séchage (3), s'étend transversalement à la direction de transport et peut être déplacée dans la direction de transport, et laquelle présente des éléments de convoyage (10) qui sont disposés à distance les uns à côté des autres et font saillie vers le bas en direction de la surface de séchage (3), et qui, lors d'une déplacement de la traverse (6) dans la direction de transport, désagrègent et retournent les boues d'épuration (2) sur la surface de séchage (3), les répartissent et les transportent dans la direction de transport, et avec des racloirs (11) qui se dressent vers le haut à partir de la surface de séchage (3) entre les éléments de convoyage (10) et qui, lors d'un passage des éléments de convoyage (10), enlèvent en les raclant les boues d'épuration (2) qui adhérent sur les éléments de convoyage (10) et fractionnent les gros grumeaux de boues d'épuration, **caractérisé en ce que** les racloirs (11) s'étendent dans la direction de transport et guident les éléments de convoyage (10) lorsque les éléments de convoyage (10) se trouvent entre les racloirs (11).

2. Dispositif selon la revendication 1, **caractérisé en ce que** les racloirs (11) sont des étriers.

3. Dispositif selon la revendication 1, **caractérisé en ce que** les racloirs (11) sont à effet de ressort.

4. Dispositif selon la revendication 1, **caractérisé en ce que** les racloirs (11) sont des plaques.

5. Dispositif selon l'une des revendications 1 à 4, **caractérisé en ce que** les racloirs (11) et/ou les éléments de convoyage (10) présentent un décalage les uns par rapport aux autres dans la direction de transport.

6. Dispositif selon la revendication 5, **caractérisé en ce que** le décalage des racloirs (11) et/ou éléments de convoyage (10) individuels n'est pas supérieur à l'étendue des racloirs (11) dans la direction de transport.

7. Dispositif selon la revendication 5 ou 6, **caractérisé en ce que** des racloirs (11) et/ou éléments de convoyage (10) voisins présentent toujours un décalage dans la même direction d'un côté de la surface de séchage (3) à l'autre.

8. Dispositif selon l'une des revendications 1 à 7, **caractérisé en ce que** le dispositif (1) présente, au moins à hauteur d'un racloir (11) le plus en avant, un guide (8) pour la traverse (6) dans la direction de transport.

9. Dispositif selon l'une des revendications précédentes, **caractérisé en ce que** la traverse (6) est déplacée en circulation.

10. Dispositif selon l'une des revendications 1 à 8, **caractérisé en ce que** la traverse (6) est déplacée en va-et-vient.
